# EUROPEAN PATENT SPECIFICATION

(11) **EP 2 689 674 B1**
(45) Date of publication and mention of the grant of the patent: **21.10.2015**
(21) Application number: 13177551.2
(22) Date of filing: 23.07.2013
(51) Int. Cl.: A23L 1/305, A23P 1/04, A23P 1/06, A23J 1/04, A23J 3/00, A23L 1/00, B01J 13/02

(54) **MICRO-ENCAPSULATED ANIMAL PROTEIN CONCENTRATE**
MIKROVERKAPSELTES TIERISCHES PROTEINKONZENTRAT
CONCENTRÉ DE PROTÉINE ANIMALE MICROENCAPSULÉE

(30) Priority: 24.07.2012 CL 20562012
(43) Date of publication of application: 29.01.2014
(73) Proprietor: MAP Chile SpA, Santiago (CL)
(72) Inventor: Cifuentes Larios, Cristian, Santiago (CL); Salosny Hübner, Simón, Santiago (CL)
(74) Representative: Bülle, Jan

(56) References cited:
- WO-A1-96/20612
- WO-A1-2005/089569
- WO-A2-2007/008384
- DE-A1- 3 937 238
- US-A1- 2006 088 645

## Description

### FIELD OF THE INVENTION

This invention relates to an animal protein concentrate, suitable for the human consumption, elaborated on the basis of fish protein. More specifically, this invention is related with combined matrix or multicore fish protein and gelatin micro-particles, optionally coated, which eliminate the fishy odor and flavor problem, suitable for the processed food production for human consumption.

### BACKGROUND ART

In the state of art, multiple attempts are known to obtain foods with high protein or fish oil content by its high nutritional contribution and low prices in comparison to other animal proteins, but with mixed results. The current state of art, although the fishmeal is highly nutritive, it is integrally assigned to the animal feed, due that the current known processes do not, up to now eliminate the fish flavor and odor, transforming the fish derivative in unattractive products for the human consumption.

Patent JP 11302158 claims a method to produce a gelatin capsule containing vegetable oils and *Lactobacillus* strains. This patent does not claim the animal protein use.

Patent JP 2000125801 claims a particle matrix composed of a dried, fermented and granulated fish meat with a polysaccharide polymer coating, but without describing the gelatin use.

The patent application WO/2004/043140 claims product and preparation method of a dry and wet particle to feed aquatic animals, composed of an indigestible matrix that may contain fish protein, in addition to many other bioactive agents. The method describes an amorphous particle, concluding from it that the objective of this application is not flavor or odor masking the particle components.

The patent application DE 3937238 discloses fish processing residues (no fishmeal) filled into macroscopic gelatine capsules. Such filled macroscopic gelatine capsules cannot be regarded as micro-encapsulated protein particles and do not form a matrix in which the protein particles are embedded.

The patent application WO/2005/115341 describes a polymeric matrix combined between indigestible and digestible elements, mentioning the fishmeal among these. The objective of this product is to provide a particle to administer medications, to a wide range of animals, mentioning human beings among these.

In the elaboration of fishmeal, it is common the use to ethoxyquin as an antioxidant, as it stabilizes the fats and protects the food nutritive value, preventing the oxidative degradation of the fats, oils and other compounds as vitamins and pigments. Although with no studies that support the relation between the ethoxyquin and diseases, the direct use of the ethoxyquin is only authorized for the pet food elaboration.

The present invention makes use of other antioxidants, to allow human consumption of the claimed product.

Ultimately, we found in the state of art inventions which use the micro- encapsulated products, among other techniques, to provide food products with high protein content and fish derivatives, but none has proved adequate in its organoleptic features for the human consumption.

### OBJECT OF THE INVENTION

An object of this invention is to provide a non-toxic product, suitable for the human consumption, masking characteristic fishy odor/flavor.

A second purpose of this invention is to provide a micro-encapsulated fishmeal product, which can be used in the processed food elaboration.

### DESCRIPTION OF THE INVENTION

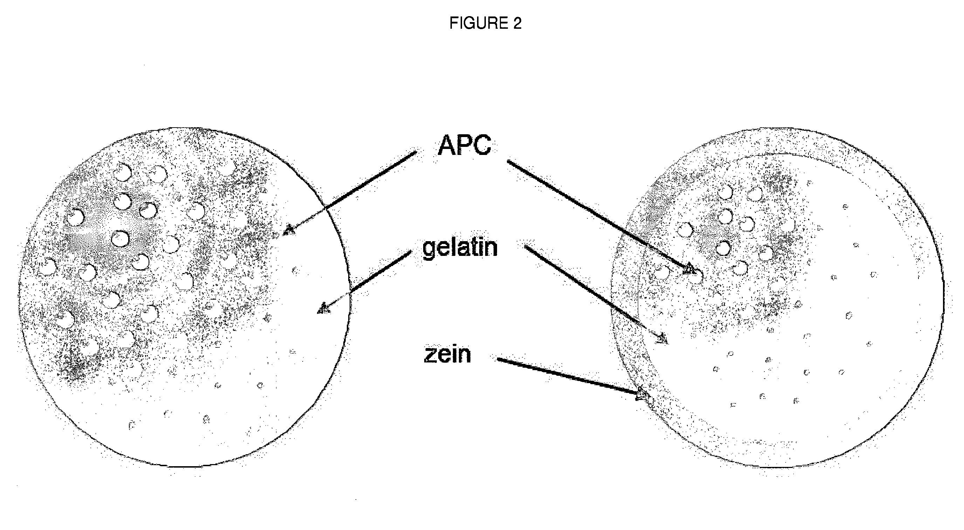

This invention comprises micro-encapsulated type particles, with fish protein and animal origin gelatin particles. A rounded or irregular matrix is obtained from specific micro-encapsulated techniques. The figure 2 shows a multicore particle scheme, with and without an optional coating layer, preferably of a protein material compound, more preferably a zein-compound.

The protein material preferably contains at least 30% of animal protein weight, particularly fishmeal, a maximum value of 10% fat content, 10% humidity and 14% ash. For the effects of this invention, the protein material will be called animal protein concentrate, APC.

The species used for the elaboration of the APC might be anchovy (*Engraulis ringens),* sardine (*Sardinops sagax),* horse mackerel (*Trachurus murphyi)* and mackerel (*Scomber japonicus*) without excluding other available species.

The size and shape of the APC particle is critical for obtaining the desired organoleptic qualities. The milling is performed, for example, in a ball mill, without excluding other methods or devices. This procedure ensures to get particles with proper size and shape, with a measured distribution size range.

Preferably, the APC particles have a particle size of less than 500 µm, more preferably, less than 200 µm. Specially preferred if the protein material particles have a particle size in the range of approximately 1 µm to 200 µm. It is also preferably that the particle size distribution is relatively narrow, for example, with at least 60% of the protein material volume with a particle size approximately between 5 µm to 100 µm.

Once the protein concentrate is processed, it is extracted with antioxidants, and can also be incorporated during the APC elaboration process.

A first selected antioxidants are the tocopherols. The tocopherol is applied at a ratio of 1,000 ppm on raw flour. The antioxidant is heated at a temperature of 45°C indirectly to reach the antioxidant product homogenization. Subsequently, the tocopherol is applied by direct addition (aspertion) to the raw fishmeal, with a spray nozzle to a fishmeal mixing screw, homogenizing the final product and is bagged.

A second selected antioxidant is EDTA. The procedure is started with the preparation of an EDTA solution at 0.5% p/v. Then, 5.0 gr of solid EDTA are weighed and diluted in 1,000 ml of distilled water to obtain the raw material coating. An immersion by each 1,000 gr of raw material is made in 0.5% p/v EDTA solution for 5 minutes, then is drained and the transformation process in fishmeal is started (by "raw material" is understood to be fish and its parts, previous to the fish meal elaboration).

Optionally and in non-exclusive manner, the fishmeal can be also treated as a standard procedure, with other antioxidants such as Sodium Ascorbate, L-ascorbic Acid, BHA, BHT, Lactic Acid, Citric Acid, Tartaric Acid, Phosphates.

The micro-encapsulated method is not limited to a particular process, but basically to any method used in the food technology compatible with the gelatin use as matrix constituent. The preferred method to obtain the product, optionally can be selected from the following alternatives: Fluid bed coating, spinning disc overcoating (rotating disc) and centrifugal co-extrusion.

Once the protein material is encapsulated, the particle size will be preferably, less than 200 µm, more preferably, less than 1,000 µm. Particularly preferably if the micro-encapsulated material particles have a size in the range approximately 100 µm to 1,000 µm. It is also preferably that the distribution of the particle size is relatively narrow, for example, at least the 60 % of the protein material volume with a particle size approximately between 200 µm to 600 µm.

The percentage by weight of the encapsulated particle coating comprises at least 5% of the total weight thereof, preferably a value between 30 and 60 % of the total weight of the particle. Together with the encapsulating procedure with gelatin and zein, it is possible to incorporate additional elements to the particle, such as colorants, flavorings, sweeteners, flavor enhancers, additives and aromatic substances.

Among the natural or synthetic colorants that can be optionally used we mention tartarazine E102, quinoline yellow E104, sunset yellow E110, blue patent V E131, Cochineal red E-120, bright blue E133, green S E142, rapid green FCF E143, caramel E150, azorubine or carminosine E122, cochineal red A E124, allura red AC E129, curcumin E-100, riboflavin E-101 chlorofill E-141, iron oxid E172, to name a few, without regarding other colorants and combinations of these.

We can mention in the group of sweeteners: sucralose E955, aspartame E951 and saccharine E954, and combinations of these or other natural or synthetic sweeteners.

Optionally natural or synthetic flavour enhancers can be incorporated such as Monosodic glutamate E621, Disodium Inosinate E631, Glutamic acid E620, Mono-potassium Glutamate E622, Calcium Diglutamate E623, Ammonium Glutamate E624, Magnesium Diglutamate E625, Guanylic acid E626, Disodium Guanylate E627, Dipotasium Guanylate E628, Calcium Guanylate E629, E630 Inosinic Acid, Dipotassium Inosate E632, Calcium Inosinate E633, 5'-Calcium Ribonucleotides E634, 5'-Sodium Ribonucleotides E635, Maltol E636, Ethylmaltol E637, Glycine and sodium salt E640, L-Leucine E641, Dimethylpolysiloxan E900, and combinations of these or other flavour enhancers.

Alternatively, natural or synthetic flavourings can be incorporated, depending of the particles used, whether in the sweet or salted food processing. Alternatives of flavorings are, for example, vanilla, caramel flavour, pineapple flavour, chocolate flavour, cheese flavour, garlic, onion flavour, etc, without discard any option or combinations thereof.

Another optional formulation is also the incorporation of flavourings to the particles, such as citric acid, sodium malate, triethly citrate, among others, and its combinations.

Alternatively, it is also desirable the incorporation of additives, such as antioxidants, conservants and stabilizers and combinations thereof.

Additionally, as an option, it is also possible to incorporate through a spinning disc and/or another micro-encapsulating technique, other coatings such as bee wax; polyunsaturated vegetal oils, as for example, canola; polysiloxanes and edible silicones, giving adequate coating for the elaboration of sweet or salted food, energetic bars, clinical products, etc.

The micro-encapsulated is capable to be used in the production of sweet or salted food for human consumption such as sausages, hamburgers, sausages and cold meat in general; soups and instant creams; dairy products such as yogurt, puddings, milk creams, fresh and mature cheese; natural fruit juices; chocolate bars and solid chocolate products; cereal bars; energetic bars; processed cereals; biscuits, bread and any food on flour basis, baked and boiled; extruded in general; any type of ice creams; gels; jams; sauces such as tomato sauce, mayonnaise, ketchup, tartar sauce, etc.; condiments. It is also possible to use it in processed meat products as ground meat, or processed, as hamburgers or nuggets, or inclusive to replace the meat completely.

By the high protein content, this product is adequate to process food supplements for adults, children and sportspeople.

The product has been designed to dissolve preferably in the post pylorus system, in this way, the probability to generate flatulence and unpleasant organoleptically meteorism, therefore it is not acceptable fish odor or fish flavor while consuming the actual final product or food processed on basis of the microencapsulated product.

The microencapsule does not dissolve in water at room temperature nor in presence of higher temperatures, such as cooking or baking temperatures, thus ensuring to count with a protein-rich food of animal origin, namely fish, but without the characteristic unpleasant odour and flavour of the fishmeal and makes it a non appetizing food for people.

The present invention provides a novelty food rich in high-quality protein from marine origin, more specifically fish, extremely versatile, which allows elaborate foods with high-nutritional content. Because of its low cost, in comparison with the beef protein, and also allows to supplement diets with particular high-calorie standards intended to feed elderly people, sportspeople, children or undernourished people or with nutritional deficiencies in general.

### DESCRIPTION OF THE FIGURES

FIGURE 1. Electron microscopy of particles sweeping of A) APC ground and B) particle surface.
FIGURE 2. Schematic representation of the multi-core particle, encapsulated with gelatin, and with an external zein coating.
FIGURE 3. Electron microscopy of particles sweeping of MAP (left) and detail of the surface of the same (right), entirely gelatin coated. B) Distribution of the MAP particle size, evaluated by laser dispersion.
FIGURE 4. A) Electron microscopy of particles sweeping of MAP/z (left) and detail of the surface of the same (right),entirely coated with zein. B) Distribution of the MAP/z particle size, evaluated by laser dispersion.

### EXAMPLES

### EXAMPLE 1. Obtention of the animal protein concentrate.

The initial raw material is animal protein, preferably fish, processed by standard fishmeal elaboration methods. During the process or later, optionally, the antioxidant or a combination thereof is applied, selected among them: tocopherol, EDTA, Sodium Ascorbate, I-Ascorbic Acid, BHA, BHT, Lactic Acid, Citric Acid, or Tartaric Acid, Phosphates.

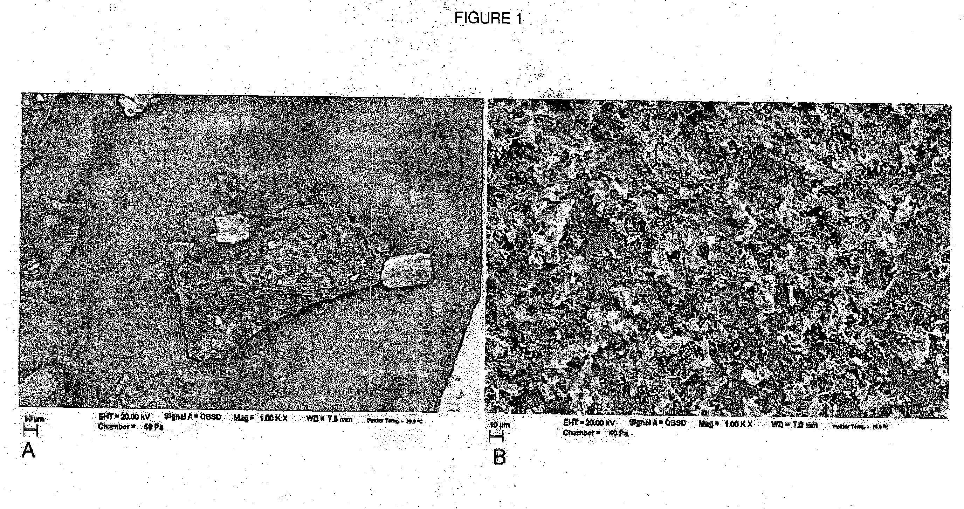

Once the fishmeal is obtained, this is processed by grinding using a ball mill into a preferably particle size in the 1 µm - 200 µm range (figure 1).

### EXAMPLE 2. Obtention of micro-particles with gelatin (figure 2).

The animal protein microencapsulated product is named MAP, by its English acronyms and obtained by spinning disk encapsulating.

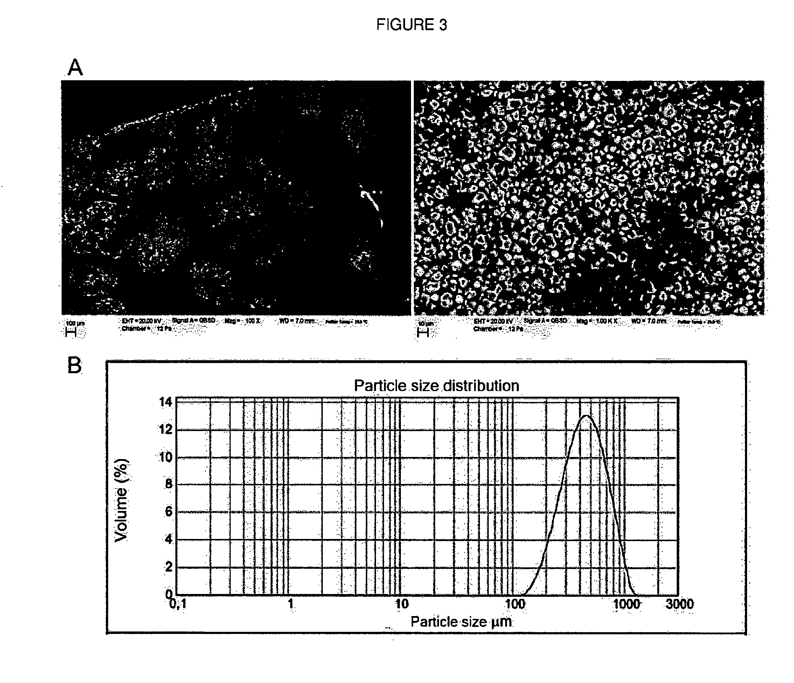

17.8 g of sodium ascorbate was added to 8.09 kg of APC in suspension at 22% w/w. This mixture was homogenized with 4.80 kg gelatin at 20% w/w in solution at 60-65°C. The suspension was poured on a spinning disk at 3,000 rpm. The solution was atomized in a chamber at room temperature. The solidified drops were collected after on a micronized starch bed. The particles were left to dry for 4 to 24 hours, depending of the room humidity of the atomization room (Figure 3).

### EXAMPLE 3. Obtention of micro-particles with zein (figure 2).

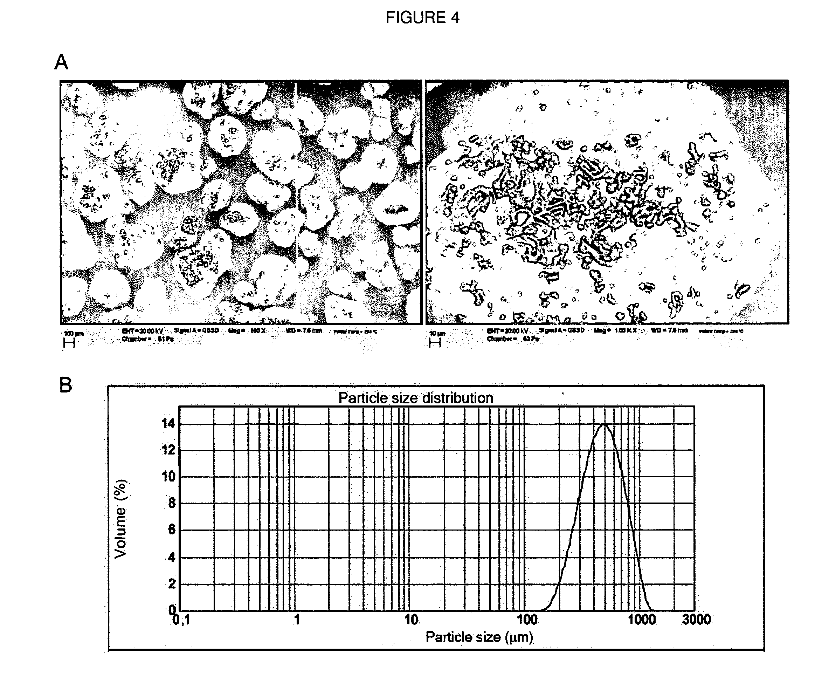

This micro encapsulated was obtained by fluid bed. The equipment was loaded with 1.5 kg of MAP (Example 2). The inlet temperature was set at 60°C with a product temperature of 40°C and an outlet temperature of 35.9°C. The air flow input is set in15 scfm. The atomization air pressure was set approximately in 6 psig and the filter pressure was approximately about 85 psig. The spray solution consisted of a mixture 90:10 of ethanol and water with 10% p/p of zein and 0.01 % w/w of Tween 80. The spray solution was applied until the weight of the final product was 1.72 kg, representing a coating of 12.79% w/w (figure 4). This product was named MAP/z

### EXAMPLE 4. Preparation of baking food, cake like with MAP.

| **Ingredients** | **Formula nº 1** | **Formula nº 2** | **Formula nº 3** |
|---|---|---|---|
| **Margarine** | 125 g | 80 g | 100 g |
| **Sugar** | 350 g | 350 g | 350 g |
| **Eggs** | 2 u | 2 u | 2 u |
| **Milk** | 320 mL | 320 mL | 320 mL |
| **lemon zest** | 1 u | 1 u | 1 u |
| **Vanilla essence** | 40 g | 40 g | 40 g |
| **MAP** | **50 g** | **100 g** | **0 g** |
| **Flour** | 320 g | 320 g | 320 g |
| **Baking powder** | 12 g | 12 g | 12 g |

Preheat the oven at 200ºC. Sugar and margarine are added in a bowl, then two previously beaten yolks and after milk and previously strained flour are mixed with MAP. Then lemon zest and the vanilla essence are added. Separate,in a bowl, 2 egg whites are beaten until stiff and are softly incorporated to the original mass. At last, baking powder is added and left to rest for 5 minutes and baked for 45 to 60 minutes at 140 ºC.

### EXAMPLE 5. Preparation of the baked food, cake like with MAP/z.

| **Ingredients** | **Formula nº 1** | **Formula nº 2** | **Formula n**º **3** |
|---|---|---|---|
| **Margarine** | 125 g | 80 g | 100 g |
| **Sugar** | 350 g | 350 g | 350 g |
| **Eggs** | 2 u | 2 u | 2 u |
| **Milk** | 320 mL | 320 mL | 320 mL |
| **lemon zest** | 1 u | 1 u | 1 u |
| **Vanilla essence** | 40 g | 40 g | 40 g |
| **MAP/z** | **50 g** | **100 g** | **0 g** |
| **Flour** | 320 g | 320 g | 320 g |
| **Baking powder** | 12 g | 12 g | 12 g |

Preheat the oven at 200ºC .Sugar and margarine are added in a bowl with 2 previously beaten yolks and then milk and previously strained flour and mixed with MAP/_{z}.. After the lemon zest and vanilla essence are added. After, separated 2 egg whites are beaten until stiff and added slowly to the original mass. At last, baking powder is incorporated and then left to rest for 5 minutes and baked for 45 to 60 minutes at 140 ºC.

### EXAMPLE 6. Preparation of the baked food, muffin like with MAP.

| **Ingredients** | **Formula 1** | **Formula 2** |
|---|---|---|
| **Butter** | 180 g | 180 g |
| **Sugar** | 150 g | 150 g |
| **Eggs** | 3 u | 3 u |
| **Milk** | 330 mL | 330 mL |
| **Orange zest** | 1 u | 1 u |
| **Vanilla essence** | 80 g | 80 g |
| **Blueberries** | 200 g | 200 g |
| **Flour** | 450 g | 450 g |
| **Baking** | | |
| **Powder** | 8 g | 8 g |
| **MAP** | **80 g** | **0 g** |

Preheat the oven at 200ºC .Mix margarine and milk in a bowl at very low heat, until melted. Incorporate the eggs and the orange zest, always beaten. Reserve. Put together in another bowl the dry ingredients, the MAP and blue berries. Pour the milk on the dry ingredients and beat slowly, from the bottom upwards with a large rubber spatula. The mass must be lumpy. It is left to rest for 5 minutes and baked for 45 to 65 minutes at 140 ºC.

### EXAMPLE 7. Preparation of the baked food, muffin like with MAP/z.

| **Ingredients** | **Formula 1** | **Formula 2** |
|---|---|---|
| **Butter** | 180 g | 180 g |
| **Sugar** | 150 g | 150 g |
| **Eggs** | 3 u | 3u |
| **Milk** | 330 mL | 330 mL |
| **Orange zest** | 1 u | 1 u |
| **Vanilla essence** | 80 g | 80 g |
| **Blueberries** | 200 g | 200 g |
| **Flour** | 450 g | 450 g |
| **Baking Powders** | 8 g | 8 g |
| **MAP/z** | **80 g** | **0 g** |

Preheat the oven at 200ºC .Mix margarine and milk at very low heat until melted in a bowl. Incorporate the eggs and the orange zest, always beaten. Reserve. Put together in another bowl the dry ingredients, the MAP/_{z} and blue berries. Pour the milk in the dry ingredients and beat slowly, carefully remove from the bottom upwards with a large rubber spatula. The mass should have lumpy aspect. It is left to rest for 5 minutes and baked for 45 to 65 minutes at 140 ºC.

### EXAMPLE 8. Preparation of hamburger with MAP.

| **Ingredients** | **Formula nº 1** | **Formula nº 2** | **Formula nº 3** | **Formula nº 4** |
|---|---|---|---|---|
| **Hamburger base** | 90 g | 90 g | 90 g | 90 g |
| **Water** | 150 mL | 300 mL | 380 mL | 300 mL |
| **Coriander** | 1 g | 2 g | 2,5 g | 2g |
| **Ciboulette** | 5 g | 8 g | 8g | 8g |
| **Beef meat** | 0 | 0 | 50 | 100 |
| **MAP** | **50 g** | **100 g** | **100 g** | **0 g** |

All the formulations were prepared following the same procedure. The hamburger basis is dissolved in water, then the dry ingredients are added, stirring until and homogenous mass is obtained and baked in a coil dish for 15-20 minutes at medium heat at a conventional oven.

### EXAMPLE 9. Preparation of hamburger type food with MAP.

| **Ingredients** | **Formula nº 1** | **Formula nº 2** | **Formula nº 3** | **Formula nº 4** |
|---|---|---|---|---|
| **Hamburger base** | 90 g | 90 g | 90 g | 90 g |
| **Water** | 150 mL | 300 mL | 380 mL | 300 mL |
| **Coriander** | 1 g | 2 g | 2,5 g | 2 g |
| **Ciboulette** | 5 g | 8 g | 8 g | 8 g |
| **Beef meat** | 0 | 0 | 50 | 100 |
| **MAP/z** | **50 g** | **100 g** | **100 g** | **0 g** |

All the formulations are prepared following the same procedure. The hamburger basis is dissolved in water, then the dry ingredients are added, stirring until and homogenous mass is obtained and baked in a coil dish for 15-20 minutes at medium heat at a conventional oven.

Consumer Panel. The food of the examples, for the purposes of this patent application writing, were prepared in sufficient quantities for a consumer panel, consisting always of 8 persons, four children between 4 and 10 years old and four adults between 20 and 70 years old.

Confectionery Products. The members of the panel were consulted about the features odor, taste, texture and aspect of foods to evaluate. The tasted foods are labeled with the number of the formulation.

No information was provided about tastes and odours to be identified, so as not to predispose. No consumer was able to detect differences between the different formulations to taste as cakes or as muffins, in none of the tasted formulations. Therefore none of the panel members, once reported of the taste\odour to evaluate (fish), were able to detect the different formulations with/without MAP and with / without MAP/z.

Hamburgers. The members of the panel were consulted about the features odour, taste, texture and aspect of foods to evaluate. The tasted foods are labeled with the number of the formulation. No information was provided about tastes and odours to be identified, so as not to predispose.

None of the consumers were able to detect differences between the different formulations, in none of the four parameters consulted in the formulations 3 and 4 of the examples 8 and 9. Therefore none of the panel members, once reported of the taste\odor to evaluate, were able to detect the different formulations with/without MAP and with/ without MAP/z containing meat.

In general, the panel members detected differences in the texture and aspect of the hamburger of the formulations 1 and 2 concerning the formulations 3 and 4 in the examples 8 and 9, clearly due to the absence of meat in the two first. Surprisingly, none of the panel members could detect a fishy/like odor in the formulations 1 and 2 of the examples 8 and 9.

## Claims

1. A microencapsulated animal protein for human consumption, comprising:
a. protein particles;
b. a gelatin matrix of animal origin;
c. optionally an external protein coating of vegetal origin (zein type);
d. optionally a matrix or external coating based on waxes, oils, polymers, polysiloxanes and derivatives; and
e. optionally additives, colorants, flavorings, conservants, enhancers of taste and/or sweeteners.

2. The microencapsulated animal protein particles for human consumption according to claim 1, wherein the animal protein is selected from fish protein processed as fishmeal (also called "animal protein concentrate", APC).

3. The microencapsulated animal protein particles for human consumption according to claim 2, wherein the particle size of the APC previous to the microencapsulated is homogenized by grinding.

4. The microencapsulated animal protein particles for human consumption according to claim 3, wherein the particle of ground fishmeal concentrate has a particle size between 1 µm and 200 µm.

5. The microencapsulated human protein particles for human consumption according to any of claims 1 to 4, wherein the protein animal concentrate is microencapsulated by obtaining a multicore matrix composed by fish protein and animal gelatin, in proportions from 30% to 95% each one, optionally.

6. The microencapsulated animal protein particles for human consumption according to any of claims 1 to 5, wherein the particle once is microencapsulated has a particle size of 100 µm to 1000 µm, more preferably between 200 µm to 600 µm.

7. The microencapsulated animal protein particles for human consumption according to claim 6, wherein the multicore matrix particle is obtained optionally through the spinning disk overcoating, fluid bed coating and/or centrifugal co-extrusion.

8. The microencapsulated animal protein particles for human consumption according to any of claims 1 to 7, wherein the fishmeal concentrate is optionally treated with EDT, tocopherols, Sodium ascorbate, I-ascorbic Acid, BHA, BHT, Lactic Acid, Citric Acid, Tartaric Acid, Phosphate as antioxidants.

9. The microencapsulated animal protein particles for human consumption according to claim 8, wherein optionally, the microencapsulated particle with gelatin has an external coating of proteic origin, preferably of zein.

10. The microencapsulated animal protein particles for human consumption according to claim 9, wherein the zein is applied through the fluid bed coating.

11. The microencapsulated animal protein particles for human consumption according to claim 9 or 10, wherein optionally to the gelatin and to the zein, is applied preferably through the fluid bed or mantle coating, other matrixes and/or coatings such as bee wax; polyunsaturated vegetal oils, as for example canola; polysiloxanes and edible silicones.

12. The microencapsulated animal protein particles for human consumption according to any of claims 1 to 7, wherein during the particle microencapsulation process, is/are added together with the matrix material or together with the coating material
- optionally one or more suitable flavorings for human consumption; and/or
- optionally one or more suitable aroma for human consumption; and/or
- optionally one or more suitable colorants for human consumption; and/or
- optionally one or more suitable sweeteners for human consumption; and/or
- optionally one or more suitable flavour enhancers for the human consumption; and/or
- optionally one or more suitable flavour conservants for human consumption; and/or
- optionally one or more suitable additives for the human consumption.

13. The microencapsulated animal protein particles for human consumption according to any of claims 1 to 7, wherein the microencapsulated particle, has no fish taste nor odor perceptible at the moment of consumption, either without processing or as part of an elaborated product.

14. The microencapsulated animal protein particles for human consumption according to any of claims 1 to 13, wherein such particle can be used in the preparation of sweet or salted foods for human consumption, such as sausages, cold meat in general; soups instant creams; dairy products, yogurt, puddings, milk creams, fresh and mature cheese, etc.; natural fruit juices; chocolates bars and chocolate based products; cereal bars; energetic bars; processed cereals; biscuits, bread and any flour based food, baked or boiled; extruded foods in general; any type of ice creams, gels, jams; sauces as extruded food in general, sauce, mayonnaise, ketchup, tartar sauce; condiments; meat processed products as ground meat, or elaborated, as hamburgers or nuggets, food supplements for adults, sportspeople and children.

15. A sweet or salted food for human consumption, such as sausages, cold meat in general; soups instant creams; dairy products, yogurt, puddings, milk creams, fresh and mature cheese, etc.; natural fruit juices; chocolates bars and chocolate based products; cereal bars; energetic bars; processed cereals; biscuits, bread and any flour based food, baked or boiled; extruded foods in general; any type of ice creams, gels, jams; sauces as extruded food in general, sauce, mayonnaise, ketchup, tartar sauce; condiments; meat processed products as ground meat, or elaborated, as hamburgers or nuggets, food supplements for adults, sportspeople and children; said sweet or salted food for human consumption comprising the microencapsulated animal protein particles for human consumption according to any of claims 1 to 13.

## Patentansprüche

1. Ein mikroverkapseltes tierisches Protein für menschlichen Verbrauch, das aus:
a) Proteinteilchen;
b) Gelatinematrix tierischen Ursprungs;
c) wahlweise einerAußenproteinbeschichtung pflanzlichen Ursprungs (Zeintyp);
d) wahlweise einer Matrix oder einer Außenbeschichtung auf der Basis Wachse, Öle, Polymere, und Derivate; und
e) wahlweise Zusatzstoffen, Farbstoffen, Aromastoffen, Konservierungsmitteln, Geschmacksverstärkern und/oder Süßungsmitteln,
besteht.

2. Die mikroverkapselten Teilchen aus tierischem Protein für menschlichen Verbrauch nach Anspruch 1, wobei das tierische Protein aus Fischprotein gewählt ist, das wie Fischmehl verarbeitetet war (das auch als "tierisches Proteinkonzentrat", TPC, gennant wird).

3. Die mikroverkapselten Teilchen aus tierischem Protein für menschlichen Verbrauch nach Anspruch 2, wobei die Teilchengröße des TPCs vor der Mikroverkapselung durch Verhmahlen homogenisiert ist.

4. Die mikroverkapselten Teilchen aus tierischem Protein für menschlichen Verbrauch nach Anspruch 3, wobei die Teilchengrößevon dem vermahlenen Fischmehlkonzentrat eine Teilchengröße zwischen 1 µm und 200 µm aufweist.

5. Die mikroverkapselten Teilchen aus tierischem Protein für menschlichen Verbrauch nach Ansprüche 1 bis 4, wobei das tierischeProteinkonzentrat durch die Gewinnungvon einer Mehrkernmatrix mikroverkapselt ist und dieseMehrkernmatrix aus Fischprotein und tierischer Gelatine, wahlweise in Anteilen von 30% bis 95% jeweils, zusammengesetz ist.

6. Die mikroverkapselten Teilchen aus tierischem Protein für menschlichen Verbrauch nach einer von Ansprüche 1 bis 5, wobei die Partikel eine Teilchengröße von 100 µm bis 1000 µm, vorzugsweise zwischen 200 µm und 600 µm, hat, sobald sie eingekapselt ist.

7. Die mikroverkapselten Teilchen aus tierischem Protein für menschlichen Verbrauch nach Anspruch 6, wobei die Mehrkernmatrixpartikel wahlweisedurch Überschichtung mittels Schleuderteller, Wirbelschichtbeschichtung und/oder zentrifugaleKoextrusion erhalten wird.

8. Die mikroverkapselten Teilchen aus tierischem Protein für menschlichen Verbrauch nach einem der Ansprüche 1 bis 7, wobei das Fischmehlkonzentrat wahlweise mit EDT, Tocopherole, Natriumascorbat, I-Ascorbinsäure, BHA, BHT, Milchsäure, Zitronensäure, Weinsäure, Phosphate als Antioxidantien behandelt ist.

9. Die mikroverkapselten Teilchen aus tierischem Protein für menschlichen Verbrauch nach Anspruch 8, wobei die mikroverkapselte Partikel mit Gelatine eine Außenbeschichtung aus Protein, vorzugsweise aus Zein, wahlweise aufweist.

10. Die mikroverkapselten Teilchen aus tierischem Protein für menschlichen Verbrauch nach Anspruch 9, wobei das Zein durch Wirbelschichtbeschichtung angewendet ist.

11. Die mikroverkapselten Teilchen aus tierischem Protein für menschlichen Verbrauch nach Anspruch 9 oder 10, wobei andere Matrizen und/oder Beschichtungen wie z.B. Bienenwachs, ungesättigte Pflanzenölen, beispielsweise Raps; Polysiloxane und eßbare Silikonen auf der Gelatin oder dem Zein, vorzugsweise durch Wirbelschicht- oder Mantelbeschichtung wahlweise aufgebracht werden.

12. Die mikroverkapselten Teilchen aus tierischem Protein für menschlichen Verbrauch nach einem der Ansprüche 1 bis 7, wobei ein oder mehrere von den folgenden Werkstoffen zusammen mit dem Matrixmaterial oder dem Beschichtungsmaterial während des Mikroverkapselungsverfahrenshinzugefügt ist/sind:
- wahlweise ein oder mehrere geeignete Aromastoffe für menschlichen Verbrauch; und/oder
- wahlweiseein oder mehrere geeignete Aromas für menschlichen Verbrauch; und/oder
- wahlweise ein oder mehrere geeignete Farbstoffe für menschlichen Verbrauch; und/oder
- wahlweise ein oder mehrere geeignete Süßungsmitteln für menschlichen Verbrauch; und/oder
- wahlweise ein oder mehrere geeignete Geschmacksverstärker für menschlichen Verbrauch; und/oder
- wahlweise ein oder mehrere geeignete Geschmackskonservierungsmitteln für menschlichen Verbrauch; und/oder
- wahlweise ein oder mehrere geeignete Zusatzstoffe für menschlichen Verbrauch.

13. Die mikroverkapselten Teilchen aus tierischem Protein für menschlichen Verbrauch nach einem der Ansprüche 1 bis 7, wobei die mikroverkapselten Partikel haben keinen wahrnehmbaren Fischgeschmack noch Geruch im Moment des Verbrauchs, entweder ohne Verarbeitung oder als Teil eines ausgearbeiteten Produkt.

14. Die mikroverkapselten Teilchen aus tierischem Protein für menschlichen Verbrauch nach einem der Ansprüche 1 bis 13, wobei solche Teilchen zur Herstellung von süßen oder gesalzenen Nahrungsmitteln für menschlichen Verzehr verwendet werden können,wie z.B. Würstchen, Wurst im Allgemeinen; Suppen, Fertigsahne, Milchprodukte, Joghurt, Pudding, Milchsahne, frischer und gereifter Käse, usw.; natürliche Fruchtsäfte; Schokoladenriegel und Schokoladenerzeugnisse; Müsliriegel; Energieriegel;Getreideverarbeitungserzeugnisse; Kekse, Brot und gebackene oder gekochte Nahrungsmittel aus Mehl; extrudierte Nahrungsmittel in Allgemeinen; aller Art von Eis, Gelen, Konfitüren; Soßen wie extrudierte Nahrungsmittel im Allgemeinen, Soße, Mayonnaise, Ketchup, Remoulade; Gewürze; verarbeitete Fleischprodukte wie Hackfleisch oder ausgearbeiteFleischprodukte wie Hamburger oder Nuggets, Nahrungsergänzungsmittel für Erwachsene, Sportler und Kinder.

15. Ein süßes oder gesalzenes Nahrungsmittel für menschlichen Verzehr wie z.B. Würstchen, Wurst im Allgemeinen; Suppen, Fertigsahne, Milchprodukte, Joghurt, Pudding, Milchsahne, frischer und gereifter Käse, usw.; natürliche Fruchtsäfte; Schokoladenriegel und Schokoladenerzeugnisse; Müsliriegel; Energieriegel; Getreideverarbeitungserzeugnisse; Kekse, Brot und gebackene oder gekochte Nahrungsmittel aus Mehl; extrudierte Nahrungsmittel in Allgemeinen; aller Art von Eis, Gelen, Konfitüren; Soßen wie extrudierte Nahrungsmittel im Allgemeinen, Soße, Mayonnaise, Ketchup, Remoulade; Gewürze; verarbeitete Fleischprodukte wie Hackfleisch oder ausgearbeite Fleischprodukte wie Hamburger oder Nuggets, Nahrungsergänzungsmittel für Erwachsene, Sportler und Kinder, wobei das süße oder gesalzene Nahrungsmittelfür menschlichen Verzehr die mikroverkapselten Teilchen aus tierischem Protein für menschlichen Verbrauch nach einem der Ansprüche 1 bis 13 enthält.

## Revendications

1. Protéine animale micro-encapsulée pour la consommation humaine, comprenant:
a) Particules protéiniques.
b) Une matrice de gélatine d'origine animale.
c) Eventuellement, une couche protectrice protéinique d'origine végétale (par exemple zéine).
d) Éventuellement une matrice ou une couverture externe sur la base des cires, d'huiles, des polymères, des polysiloxanes et dérivés ; et
e) Facultativement des additifs, des colorants, des arômes, des aromatisants, des conservateurs, des exhausteurs de goût et / ou édulcorants.

2. Selon la revendication nº 1, des particules micro-encapsulées de protéine animale pour une consommation humaine, où la protéine d'origine animale est de préférence sélectionnée d'une protéine de poisson traitée comme farine de poisson (aussi appelé concentré de protéine animale, CPA).

3. Selon la revendication nº 2, des particules micro-encapsulées de protéine animale pour une consommation humaine, où la taille de particule du CPA est homogénéisée au moyen de broyage avant de le micro-encapsuler.

4. Des particules micro-encapsulées de protéine animale pour la consommation humaine selon la revendication nº 3, dans lesquelles, le concentré de particules de farine de poisson broyée a une taille de particule comprise entre 1 µm et 200 µm.

5. Des particules micro-encapsulées de protéine animale pour la consommation humaine selon les revendications nº 1 à nº 4, dans lesquelles le concentré de protéine animale est micro-encapsulé au moyen de l'obtention d'une matrice à plusieurs noyaux comprenant de la protéine de poisson et de la gélatine animale dans des proportions qui vont éventuellement de 30% à 95% de chacun.

6. Des particules micro-encapsulées de protéine animale pour la consommation humaine selon les revendications nº 1 à nº 5, dans lesquelles la particule une fois micro-encapsulée a une taille de particule de 100 µm à 1000 µm, préférablement entre 200 µm et 600 µm.

7. Des particules micro-encapsulées de protéine animale pour la consommation humaine selon la revendication nº 6, dans lesquelles la particule de matrice multi-coeur est obtenue éventuellement par l'intermédiaire du disque de filage de revêtement, du revêtement en lit fluidisé et / ou de la coextrusion centrifuge.

8. Des particules micro-encapsulées de protéine animale pour la consommation humaine selon les revendications nº 1 à nº 7, où le concentré de farine de poisson peut être traité optionnellement avec EDT, tocophérols, Ascorbate de sodium, acide I- ascorbique, BHA, BHT, Acide Lactique, Acide Citrique, Acide Tartrique, Phosphate comme antioxydants.

9. Des particules micro-encapsulées de protéine animale pour la consommation humaine selon la revendication nº 8, où éventuellement la particule micro-encapsulée avec gélatine a une enveloppe extérieure d'origine protéique, composée de préférence de zéine.

10. Des particules micro-encapsulées de protéine animale pour la consommation humaine selon la revendication nº 9, dans lesquelles la zéine s'applique préférablement au moyen de la technique de manteau ou en lit fluidisé.

11. Des particules micro-encapsulées de protéine animale pour la consommation humaine selon les revendications nº 9 et nº 10, où, de manière optionnelle à la gélatine et à la zéine, on applique préférablement au moyen de la technique de manteau ou de lit fluidisé, d'autres matrices et/ou des couvertures telles que cire d'abeille ; des huiles végétales polyinsaturées comme par exemple canola ; les polysiloxanes et des silicones comestibles.

12. Particules micro-encapsulées de protéine animale pour la consommation humaine selon les revendications nº 1 à nº 7, dans lesquelles au cours du processus de micro-encapsulée de la particule, il peut être ajouté simultanément avec le matériel de matrice ou avec le matériau de couverture:
- Facultativement un ou plusieurs aromatisants appropriés pour la consommation humaine ; et/ou
- Facultativement un ou plusieurs arômes appropriés à la consommation humaine ; et/ou
- Facultativement un ou plusieurs colorants appropriés pour la consommation humaine ; et/ou
- Facultativement un ou plusieurs édulcorants appropriés pour la consommation humaine ; et/ou
- Facultativement un ou plusieurs exhausteurs de goût convenables pour la consommation humaine ; et/ou
- Éventuellement un ou plusieurs conservateurs appropriés pour la consommation humaine ; et/ou
- Éventuellement un ou plusieurs additifs appropriés pour la consommation humaine.

13. Des particules micro-encapsulées de protéine animale pour la consommation humaine selon les revendications nº 1 à nº 7, où la particule micro-encapsulée n'a ni saveur, ni odeur de poisson perceptible au moment de la consommation, soit non traité ou comme partie d'un aliment élaboré.

14. Particules micro-encapsulées à la consommation humaine selon les revendications nº 1 à nº 13 dans lesquellee ladite particule peut être utilisée dans l'élaboration des aliments sucrés ou salés pour la consommation humaine, tels que saucissons, saucisses en général ; soupes et crèmes instantanées ; produits laitiers comme le yaourt, crème caramel, crèmes à base de lait, du fromage frais et mûr, etc. ; jus de fruits naturels ; barres de chocolat et de produits à base de chocolat ; barres de céréales ; barres énergétiques ; céréales transformées ; biscuits, du pain et de la nourriture à base de farine, enfourné ou cuit ; en général extrudée ; glaces de toutes sortes ; gelées ; confitures ; des sauces telles que sauce de tomates, mayonnaise, ketchup,
sauce tartare ; condiments ; produits à base de viande transformés tels que viande de boeuf moulue, ou de produits transformés, tels que les hamburgers ou nuggets, des suppléments alimentaires pour adultes, sportifs et enfants ; nourriture pour enfants.

15. Un aliment sucré ou salé pour une consommation humaine, tels comme saucisses, les viandes en général ; soupes et crèmes instantanées ; les produits laitiers comme le yaourt, le pudding, les crèmes à base de lait, fromage frais et mûr, etc. ; jus de fruits naturels ; barres de chocolat et produits à base de chocolat ; barres de céréales ; barres énergétiques ; céréales transformées ; biscuits, du pain et de la nourriture à base de farine, fournée ou cuit ; généralement extrudée ; glaces de toutes sortes ; gelées ; confitures ; des sauces telles que la sauce tomate, mayonnaise, ketchup, sauce tartare ; condiments ; produits à base de viande transformés tels que viande de boeuf moulue ou de produits transformés tels que les hamburgers ou des nuggets, des compléments alimentaires pour des adultes, des athlètes et des enfants ; nourriture pour enfants ; où, cet aliment sucré ou salé pour une consommation humaine comprend de la protéine animale micro-encapsulée pour une appropriée consommation humaine conformément selon les revendications nº 1 à nº 13.
